# FASCICULE DE BREVET EUROPEEN

(11) **EP 3 372 880 B1**
(45) Date de publication et mention de la délivrance du brevet: **04.12.2019**
(21) Numéro de dépôt: 18160429.9
(22) Date de dépôt: 07.03.2018
(51) Int. Cl.: F16K 35/02, E03C 1/04, F16K 11/00, G05D 23/13

(54) **DISPOSITIF FORMANT MITIGEUR THERMOSTATIQUE, EN PARTICULIER POUR UNE DOUCHE OU UN EVIER, NOTAMMENT POUR LES HÔPITAUX**
VORRICHTUNG, DIE EINEN THERMOSTATMISCHER DARSTELLT, INSBESONDERE FÜR EINE DUSCHE ODER EIN SPÜLBECKEN FÜR KRANKENHÄUSER
DEVICE FORMING A THERMOSTATIC MIXER, IN PARTICULAR FOR A SHOWER OR A SINK, MAINLY FOR HOSPITALS

(30) Priorité: 08.03.2017 FR 1770226
(43) Date de publication de la demande: 12.09.2018
(73) Titulaire: Les Robinets Presto, 92120 Montrouge (FR)
(72) Inventeur: BIJU-DUVAL, Rémi, 17110 Saint-Georges-de-Didonne (FR)
(74) Mandataire: Eidelsberg, Olivier Nathan

(56) Documents cités:
- DE-U1- 20 020 298
- US-B1- 7 926 511
- Presto: "Communiqué de presse Janvier 2014", , 31 janvier 2014 (2014-01-31), XP055417056, Extrait de l'Internet: URL:http://www.presto.fr/sites/default/fil es/2014_-_cp_-_mastermix_-_fr.pdf [extrait le 2017-10-18]

## Description

La présente invention se rapporte à un dispositif formant mitigeur thermostatique, en particulier pour une douche ou un évier, notamment pour collectivités, notamment pour les hôpitaux, comportant un dispositif dit de choc thermique, qui fait passer de l'eau à très grande température dans les conduits d'arrivée et/ou de sortie d'eau de la douche ou de l'évier pour réaliser une désinfection des circuits d'eau.

On connaît déjà dans l'art antérieur, de Presto "les incontournables | 2017 ROBINETTERIE POUR LES USAGES INTENSIFS DANS LES ENVIRONNEMENTS EXIGEANTS", 27 février 2017 (2017-02-27), pages 1 à 44, XP055417055, page 31, une photographie et trois plans en coupe de l'extérieur d'un mitigeur thermostatique de douche qui n'a été mis à disposition du public qu'en juin 2017, soit après la date de priorité de la présente demande. Les seules informations fournies dans ce document sont qu'il s'agit d'un mitigeur thermostatique de douche à corps froid à intérieur lisse, à cartouches céramique et thermostatique, à intercommunication impossible entre l'ECS et l'EFS, à double butée à 38°C et 41°C, à déverrouillage uniquement par les services techniques pour choc thermique et à montage sur attentes femelles 1/2 intégrées à la cloison entre axe 150 mm (+/10).

Il est donc décrit dans cette publication de l'art antérieur un mitigeur thermostatique pour douche comportant un corps de base ayant deux arrivées d'eau, respectivement pour l'eau chaude et l'eau froide et une sortie pour l'eau mitigée, des moyens pour mitiger l'eau chaude et l'eau froide, sous la forme d'une cartouche dite thermostatique, et des moyens pour régler le débit, sous la forme d'une cartouche dite céramique, étant disposés dans le corps de base entre les arrivées d'eau et la sortie, des moyens de manœuvre pour régler le débit de sortie de l'eau mitigée et des moyens de manœuvre pour régler la température de l'eau mitigée. Une butée double est prévue pour bloquer la rotation du volant jusqu'à une position correspondant à une température de 38°C ou 41°C. Lorsque l'on souhaite réaliser un choc thermique pour une désinfection des circuits d'eau, il est possible de déverrouiller le mitigeur.

On connaît aussi de DE 200 20 298 un mitigeur thermostatique 1 pour douche comportant des moyens de manœuvre 2 pour régler la température de l'eau mitigée sous la forme d'un volant rotatif, des moyens 4 formant butée pour permettre à l'utilisateur de poursuivre la rotation du volant, lesdits moyens étant disposés sur la façade avant du volant rotatif.

On connaît aussi du "Communiqué de presse Janvier 2014", 31 janvier 2014 (2014-01-31), XP0055417056, Extrait de l'Internet :URL:http://www.presto.fr/sites/default/f iles/2014 _-_cp_-_mastermix_-_fr.pdf, une photographie d'un mitigeur thermostatique de douche. Il s'agit d'un mitigeur thermostatique de douche à cartouches céramique et thermostatique, à intercommunication impossible entre l'ECS et l'EFS, à déverrouillage uniquement par les services techniques pour choc thermique.

On aimerait avoir à disposition un mitigeur dont la manœuvre des moyens de réglage de la température soit plus ergonomique pour l'utilisateur tout en laissant un accès aisé pour la maintenance.

Suivant l'invention, un mitigeur thermostatique pour douche, lavabo ou évier dans une collectivité, notamment dans un hôpital, est tel que défini à la revendication 1, des perfectionnements et modes de de réalisation préférés étant définis aux sous-revendications.

De préférence, les moyens pour mitiger l'eau chaude et l'eau froide sont sous la forme d'une cartouche dite thermostatique.

De préférence, les moyens pour régler le débit sont sous la forme d'une cartouche dite céramique.

De préférence, les moyens formant première butée bloquent la rotation du volant après qu'il ait effectué une rotation à partir d'une position plein froid.

Il en résulte que la surface latérale extérieure du volant est libérée de la place préalablement prévue pour les moyens de déblocage et, si on le souhaite, on peut y prévoir à leur place un élément aidant à manœuvrer le volant, ce dernier, étant de forme circulaire et en un matériau, classiquement en laiton ou acier inoxydable, peu rugueux, étant, sans cette aide à la saisie, difficile à manœuvrer pour un utilisateur ayant les mains mouillées.

Suivant un mode de réalisation préféré, les moyens pour escamoter la première butée sont constitués d'une plaque en forme de disque pouvant basculer entre deux positions, une position dans laquelle elle bloque la rotation du volant dans le sens d'une augmentation de la température et une position dans laquelle elle ne bloque pas la rotation du volant dans le sens d'une augmentation de la température, l'axe de rotation de la plaque étant perpendiculaire à l'axe longitudinal du volant.

En particulier, le volant est de forme sensiblement cylindrique circulaire avec cependant un promontoire de saisie qui fait saillie latéralement de la surface latérale extérieure du volant, de sorte que lorsque l'utilisateur pince le promontoire entre deux de ses doigts, notamment le pouce et l'index, il peut faire tourner le volant.

De préférence, le promontoire fait saillie latéralement du volant au niveau du point le plus bas du volant lorsque le volant est en position dite plein froid.

En particulier, la vis de réglage se trouve diamétralement à l'opposé du promontoire de saisie.

De préférence, dans la position non escamotée de la première butée, la plaque affleure à la surface avant du volant, de sorte qu'aucune aspérité, épaulement ou autre interstice n'est formé à la surface avant du volant qui présente ainsi une façade avant parfaitement lisse qui est facile à nettoyer et à désinfecter.

A titre d'exemple, on décrit un mode de réalisation préféré de l'invention en se reportant aux dessins dans lesquels :
- la figure 1 est une vue en perspective d'un mitigeur thermostatique d'une douche en milieu hospitalier, dit à entre-axe 150mm, suivant un mode de réalisation de l'invention ;
- la figure 2A est une vue en coupe longitudinale du volant de commande de manœuvre pour régler la température du dispositif de la figure 1, tandis que la figure 2B est une vue en coupe transversale suivant la ligne A-A de la figure 1, la position du volant aux figures 2A et 2B correspondant à une position plein froid ;
- les figures 3A et 3B sont des vues identiques à celles des figures 2A et 2B, après que le volant a subi une rotation d'un angle correspondant à la fourniture d'une eau à la température d'environ 30°C ;
- les figures 4A et 4B sont des vues identiques à celles des figures 2A et 2B ou 3A et 3B dans lesquelles le volant a subi, par rapport aux figures précédentes une rotation jusqu'à atteindre une première butée dans laquelle la température délivrée est à 38°C ;
- les figures 5A et 5B sont des vues identiques à celles des figures précédentes 2A à 4A et 2B à 4B, dans lesquelles le volant a été libéré de la première butée ;
- les figures 6A et 6B sont des vues identiques à celles des figures 2A à 5A et 2B à 5B dans lesquelles le volant a subi une rotation jusqu'à atteindre une deuxième butée de température à 45°C ; et
- les figures 7A et 7B sont des vues identiques à celles des figures 6A et 6B dans lesquelles la vis a été dévissée pour désactiver la deuxième butée à 45° ou butée de sécurité, le volant pouvant alors être tourné jusqu'à atteindre une position, représentée aux figures 8A et 8B, dans laquelle un choc thermique est réalisé.

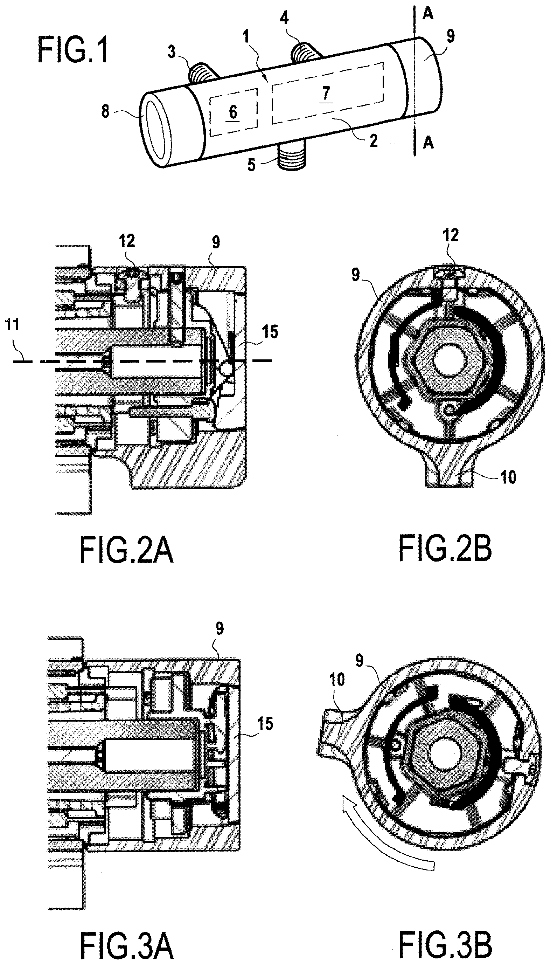

A la figure 1, il est représenté un dispositif formant mitigeur thermostatique suivant un mode de réalisation de l'invention.

Le mitigeur 1 comporte un corps 2 de base de forme sensiblement cylindrique circulaire ayant deux raccordements 3 et 4 destinés à être raccorder aux arrivées respectivement d'eau froide et d'eau chaude, au niveau d'attentes murales d'un mur, et une sortie 5 pour l'eau mitigée destinée à alimenter un tuyau de douche (non représenté). A l'intérieur du corps 2 de base sont disposés, entre les raccordements 3 et 4 d'arrivée d'eau chaude et d'eau froide et la sortie 5 d'eau mitigée, deux cartouches (représentées en pointillés), respectivement une cartouche 6 céramique pour la commande du débit et une cartouche thermostatique 7 pour la commande la température de l'eau mitigée. L'agencement respectif des cartouches 6 et 7 est bien connu dans le domaine et n'est pas décrit ici plus en détail.

Le mitigeur 1 comporte en outre deux organes de manœuvre sous la forme de deux volants 8 et 9 de forme sensiblement cylindrique circulaire. Le volant 8 permet le réglage du débit. Il pourrait également être réalisé non pas sous la forme d'un volant mais d'une manette ou de toute autre manière connue. Le volant 9 quant à lui est représenté également en coupe longitudinale et transversale suivant la ligne AA respectivement aux figures 2A à 8A et 2B à 8B.

Le corps du robinet et les volants de manœuvre sont en acier inoxydable ou en laiton ou tout autre matériau de ce genre, classiques dans le domaine de la robinetterie pour douche ou évier, en particulier il s'agit de matériau lisse sur lequel les gouttelettes d'eau glissent.

Le volant 9 de réglage de la température est de forme cylindrique circulaire, avec cependant un promontoire 10 issu latéralement de la surface latérale du volant. Ce promontoire présente deux surfaces opposées s'étendant dans des plans radiaux de dimension suffisante pour que l'utilisateur puisse pincer le promontoire entre le pouce et l'index pour, en exerçant une force sur le promontoire, faire pivoter le volant par rapport à son axe 11 longitudinal. De préférence, le promontoire et la surface extérieure du volant forme un corps monolithique.

La tête d'une vis 12 de déblocage apparaît à la surface extérieure latérale du volant, diamétralement à l'opposé du promontoire.

Comme représenté aux figures 2A à 8A et 2B à 8B, le volant 9 de manœuvre de la température est monté rotatif par rapport à l'axe 11 longitudinal du corps 2. Suivant d'autres modes de réalisation possible, il pourrait être monté à une autre face du corps, par exemple avant, sur le dessus ou le dessous, du mitigeur. De même, l'axe 11 de pivotement est horizontal, parallèlement à la fois au mur sur lequel est monté le mitigeur et à l'axe du longitudinal du mitigeur. Toute autre orientation de l'axe est possible en restant dans le domaine de protection de la présente invention.

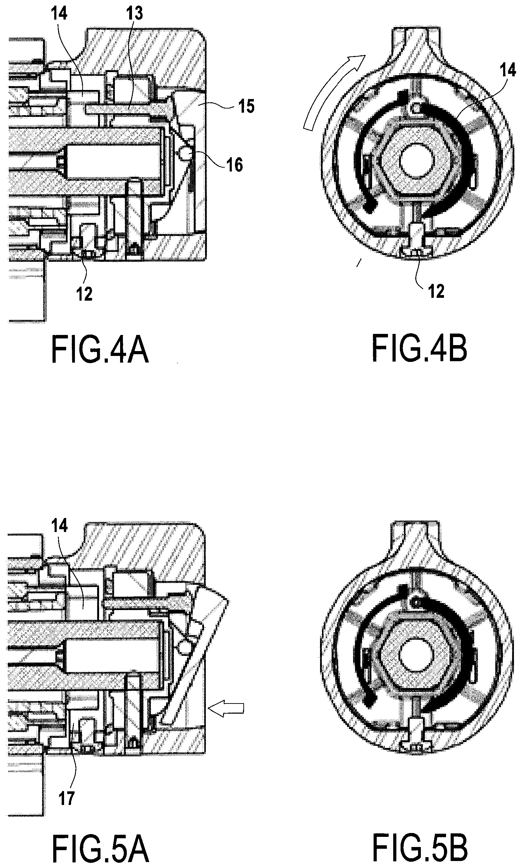

La rotation du volant 9 permet de le faire passer librement entre la position représentée aux figures 2A et 2B qui correspond à la température la plus basse pouvant être fournie par le mitigeur (position plein froid) jusqu'à la position représentée aux figures 4A et 4B, appelée position à 38°C. Dans la position plein froid, le promontoire 10 radial fait saillie de la surface latérale du volant sensiblement au point le plus bas de cette surface. Dans le même temps, la vis 12 affleure à la surface extérieure du volant diamétralement à l'opposé du promontoire.

La rotation du volant entre les positions des figures 2A et 2B, 3A et 3B et 4A et 4B, et toutes positions intermédiaires à l'intérieur de celles-ci dans le sens des aiguilles d'une montre aux figures, est libre. Au fur et à mesure que l'on tourne le volant, la cartouche thermostatique agit pour délivrer une température de plus en plus chaude pour atteindre 38° dans la position représentée aux figures 4A et 4B. Dans cette position tournée à 180° par rapport à la position initiale plein froid, la vis 12 se trouve dans la position la plus basse du volant. En outre, dans cette position, le volant est bloqué en rotation et ne peut plus poursuivre sa rotation. Une tige 13 solidaire en rotation du volant vient, dans cette position, buter contre le bord d'une surface 14 en forme de secteur cylindrique circulaire solidaire du corps 2 du mitigeur, de sorte que le volant est bloqué et ne peut plus tourner. La tige 13 tourne avec le volant par rapport à l'axe longitudinal 11, mais peut subir un déplacement parallèlement à l'axe 11. La tige 13 est en particulier soumise à l'effet d'un premier ressort qui tend à la pousser vers l'extérieur.

La face ou façade avant du volant 9 est fermée par une plaque 15 en forme de volet basculant. La tête de la tige 13 porte, sous l'effet du premier ressort, contre la plaque 15 en forme de disque en tendant à la pousser vers l'extérieur. Cependant la plaque 15 d'une part bute par une partie de son bord (partie inférieure dans la position plein froid de la figure 2A) contre le bord du cadre 18 circulaire formé à la façade avant du volant et entourant la plaque 15 et d'autre part est soumise à l'effet d'un deuxième ressort plus raide que le premier ressort qui tend à maintenir la plaque de sorte que celle ci reste à l'intérieur du volant et empêche tout déplacement de la tige 13. La plaque 15 est en outre montée pivotante par rapport à un axe 16 perpendiculaire à l'axe longitudinal du corps 2 et du volant 9. Dans cette position, la surface extérieure de la plaque 15 affleure avec le bord extérieur du cadre 18 dans lequel elle est reçue, pour ainsi former une façade parfaitement plane et sans aspérité, épaulement et autre interstice qui sinon nuirait à la propreté et nécessiterait fréquemment un nettoyage et/ou une désinfection.

Dans la position représentée à la figure 4A et 4B, la plaque 15 peut être pivotée par l'utilisateur, qui appuie sur la surface extérieure de la plaque qui se trouve en dessous de l'axe 16 (voir la flèche à la figure 5A), ce qui a pour effet de libérer la partie supérieure de la plaque 15 de sa butée contre le bord intérieur du cadre 18 et de l'action du deuxième ressort, ce qui entraîne également le déplacement vers l'avant de la tige 13, la libérant ainsi de sa butée contre le bord supérieur de la surface 14 semi circulaire de butée. Il en résulte que le volant 9 est de nouveau libéré pour poursuivre sa rotation dans le sens des aiguilles d'une montre, cette rotation permettant d'obtenir une température de l'eau mitigée supérieure à celle (38°C) correspondant à la position des figures 4A et 4B.

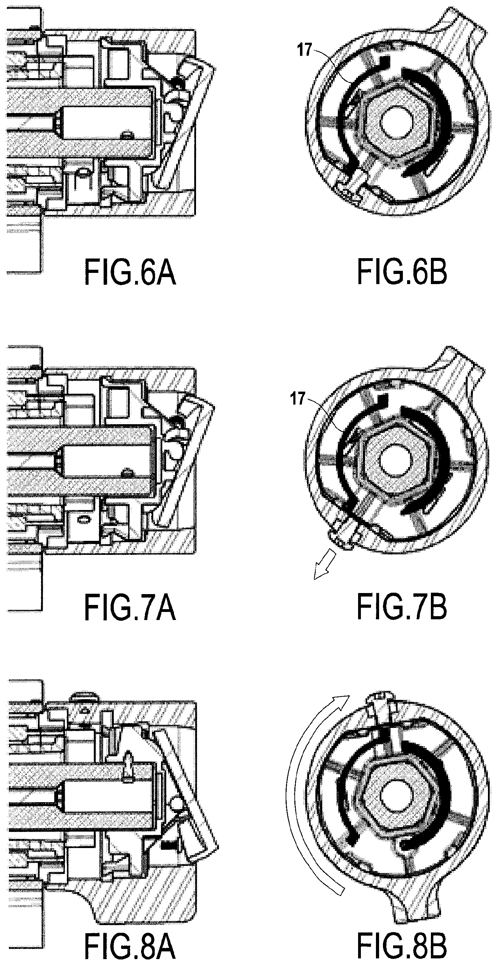

Cette rotation peut s'effectuer jusqu'à la position représentée aux figures 6A et 6B ou 7A et 7B, jusqu'à la position dite à 41°C. Pendant cette rotation, la pointe du côté arrière de la tige 13 bute contre le bord avant de la surface 14 et maintient ainsi la plaque 15 à l'état pivotée, malgré la force de rappel du deuxième ressort. Dans la position dite à 41°C, la partie de pointe de la tige de la vis 12 vient buter contre le bord inférieur d'une surface 1 en arc de cercle solidaire du corps 2 du mitigeur. Dans la position représentée aux figures 6A et 6B, la vis 12 empêche ainsi, par butée, toute rotation supplémentaire du volant au-delà de températures qui seraient trop chaudes pour un utilisateur normal de la douche.

Cependant, il peut arriver que l'installateur, le réparateur ou même l'utilisateur ait besoin d'effectuer une désinfection. Pour ce faire, il a besoin de faire passer dans les circuits d'eau une eau à une température très élevée de l'ordre de 90 ou 100°C qui pourrait s'avérer dangereuse pour l'utilisateur si la fourniture d'une eau à une telle température se déclenchait par inadvertance. Ce n'est qu'après dévissage de la vis pour la soustraire à sa butée contre la surface 17 pour la faire ainsi passer dans la position représentée aux figures 7A et 7B que le volant peut être pivoté à fond pour atteindre la position représentée aux figures 8A et 8B dans laquelle le volant atteint la fin de la course de la cartouche thermique et donc la température maximale que peut fournir la cartouche thermique. Dans cette position, le volet 15 est toujours maintenu pivoté par la tige 13 malgré l'action du deuxième ressort.

Il est à noter que, dans la position des figures 6A, 6B, 7A et 7B, la vis de réglage 12 est dans une position accessible pour le réparateur, notamment pour pouvoir la manœuvrer à l'aide d'une vis.

## Revendications

1. Mitigeur (1) thermostatique pour douche, évier ou lavabo dans une collectivité, notamment dans un hôpital, comportant un corps (2) de base ayant deux arrivées d'eau, respectivement pour l'eau chaude et l'eau froide, et une sortie (5) pour l'eau mitigée, des moyens pour mitiger l'eau chaude et l'eau froide et des moyens pour régler le débit étant disposés dans le corps de base entre les arrivées d'eau et la sortie, des moyens de manœuvre pour régler le débit de sortie et des moyens de manœuvre pour régler la température de l'eau mitigée sous la forme d'un volant (9) rotatif, des moyens formant première butée étant prévus pour bloquer la rotation du volant après qu'il ait effectué une rotation jusqu'à une position correspondant à une première température, par exemple 38°C, des moyens étant prévus pour escamoter la première butée de température pour permettre à l'utilisateur de poursuivre la rotation du volant jusqu'à une deuxième butée, dite de sécurité, correspondant en général à une température de 41°C à 45°C, les moyens pour escamoter la première butée (13, 14) étant disposés sur la façade avant du volant (9) rotatif,
**caractérisé en ce que** le mitigeur comporte
une vis (12)de déblocage pour débloquer la butée (17) de sécurité étant accessible à la surface latérale extérieure du volant pour permettre, après déblocage, de réaliser un choc thermique de désinfection.

2. Mitigeur suivant la revendication 1, **caractérisé en ce que** les moyens pour escamoter la première butée sont constitués d'une plaque (15) en forme de disque pouvant basculer entre deux positions, une position dans laquelle elle bloque la rotation du volant dans le sens d'une augmentation de la température et une position dans laquelle elle ne bloque pas la rotation du volant dans le sens d'une augmentation de la température, l'axe (16) de rotation de la plaque étant perpendiculaire à l'axe longitudinal du volant.

3. Mitigeur suivant la revendication 1 ou 2, **caractérisé en ce que** le volant (9) est de forme sensiblement cylindrique circulaire avec cependant un promontoire (10) de saisie qui fait saillie latéralement de la surface latérale extérieure du volant, de sorte que lorsque l'utilisateur pince le promontoire entre deux de ses doigts, notamment le pouce et l'index, il peut faire tourner le volant.

4. Mitigeur suivant la revendication 3, **caractérisé en ce que** le promontoire (10) fait saillie latéralement du volant au niveau du point le plus bas du volant lorsque le volant est en position dite plein froid.

5. Mitigeur suivant la revendication 3 ou 4, **caractérisé en ce que** la vis (12) de réglage se trouve diamétralement à l'opposé du promontoire (10) de saisie.

6. Mitigeur suivant l'une des revendications 2 à 5, **caractérisé en ce que** dans la position non escamotée de la première butée, la plaque (15) affleure à la surface avant du volant.

## Patentansprüche

1. Thermostatmischer (1) für eine Dusche, ein Spülbecken oder Waschbecken in einer Gemeinschaftseinrichtung, insbesondere einem Krankenhaus, umfassend einen Grundkörper (2) mit zwei Wassereinlässen jeweils für Warm- und Kaltwasser und einem Auslass (5) für gemischtes Wasser, Mittel zum Mischen von Warm- und Kaltwasser und Mittel zum Einstellen des Durchflusses, die im Grundkörper zwischen den Wassereinlässen und dem Auslass angeordnet sind, Betriebsmittel zum Einstellen des Auslassdurchflusses und Betriebsmittel zum Einstellen der Temperatur des gemischten Wassers in Form eines drehbaren Handrades (9), wobei erste Anschlagmittel vorgesehen sind, um die Drehung des Handrades zu sperren, nachdem es sich in eine einer ersten Temperatur entsprechende Position gedreht hat, zum Beispiel 38 °C, wobei Mittel vorgesehen sind, um den ersten Temperaturanschlag zu übergehen, um es dem Benutzer zu ermöglichen, die Drehung des Handrads bis zu einem zweiten Anschlag fortzusetzen, dem Sicherheitsanschlag, der im Allgemeinen einer Temperatur von 41 °C bis 45 °C entspricht, wobei die Mittel zum Übergehen des ersten Anschlags (13, 14) an der Stirnseite des rotierenden Handrades (9) angeordnet sind, **dadurch gekennzeichnet, dass** der Mischer eine Entsperrschraube (12) zum Entsperren des Sicherheitsanschlags (17) aufweist, die an der Außenseitenfläche des Handrades zugänglich ist, um nach dem Entsperren einen Thermoschock zur Desinfektion zu ermöglichen.

2. Mischer nach Anspruch 1, **dadurch gekennzeichnet, dass** die Mittel zum Übergehen des ersten Anschlags aus einer scheibenförmigen Platte (15) bestehen, die zwischen zwei Positionen wechseln kann, einer Position, in der sie die Drehung des Handrads in Richtung eines Temperaturanstiegs - sperrt, und einer Position, in der sie die Drehung des Handrads in Richtung eines Temperaturanstiegs nicht sperrt, wobei die Drehachse (16) der Platte senkrecht zur Längsachse des Handrads verläuft.

3. Mischer nach Anspruch 1 oder 2, **dadurch gekennzeichnet, dass** das Handrad (9) im Wesentlichen kreiszylindrisch geformt ist, jedoch einen Greifvorsprung (10) aufweist, der seitlich von der äußeren Seitenfläche des Handrads vorsteht, so dass der Benutzer, wenn er den Vorsprung zwischen zwei Fingern, insbesondere Daumen und Zeigefinger, greift, das Handrad drehen kann.

4. Mischer nach Anspruch 3, **dadurch gekennzeichnet, dass** der Vorsprung (10) seitlich vom Handrad am tiefsten Punkt des Handrads herausragt, wenn sich das Handrad in der sogenannten ganz kalten Position befindet.

5. Mischer nach Anspruch 3 oder 4, **dadurch gekennzeichnet, dass** die Einstellschraube (12) dem Greifvorsprung (10) diametral gegenüberliegt.

6. Mischer nach einem der Ansprüche 2 bis 5, **dadurch gekennzeichnet, dass** die Platte (15) in der nicht übergangenen Position des ersten Anschlags bündig mit der Vorderfläche des Handrads abschließt.

## Claims

1. Thermostatic mixer valve (1) for shower, sink or washbasin in a community, in particular in a hospital, comprising a basic body (2) with two water inlets for hot and cold water respectively, and one outlet (5) for the mixed water, means for mixing the hot and cold water with means for adjusting the flow being positioned in the basic body between the water inlets and outlets, means of operation for adjusting the output flow and means of operation for adjusting the temperature of the mixed water in the form of a rotary hand wheel (9), means for forming a first stop being fitted to lock rotation of the hand wheel after rotation to a position corresponding to a first temperature, for example 38 °C, means being provided for disengaging the first temperature stop to enable the user to continue rotation of the hand wheel to a second, or safety stop, corresponding in general to a temperature of 41°C to 45°C, means for disengaging the first stop (13, 14) being placed on the front face of the rotating hand wheel (9), **characterised in that** the mixer comprises a locking screw (12) to lock the safety stop (17) being accessible on the lateral surface of the rotating hand wheel, to produce a disinfecting thermal shock after unlocking.

2. Mixer according to claim 1, **characterised in that** the means for disengaging the first stop consist of a plate (15) in the form of a disc that can pivot between two positions, a position in which it blocks rotation of the hand wheel in the direction of increasing the temperature and a position in which it does not lock rotation of the hand wheel in the direction of increasing the temperature, the axis (16) of rotation of the plate being perpendicular to the longitudinal axis of the hand wheel.

3. Mixer according to claim 1 or 2, **characterised in that** the hand wheel (9) is of essentially circular cylindrical form but with a control projection (10) that projects laterally from the lateral exterior surface of the hand wheel, so that when the user grips the projection between their fingers, in particular between the thumb and index finger, they can turn the hand wheel.

4. Mixer according to claim 3, **characterised in that** the projection (10) projects laterally from the hand wheel at the lowest point of the hand wheel when the hand wheel is in the fully cold position.

5. Mixer according to claim 3 or 4, **characterised in that** the adjusting screw (12) is located diametrically opposite the control projection (10).

6. Mixer according to one of claims 2 to 5, **characterised in that** in the disengaged position of the first stop, the plate (15) is flush with the front surface of the hand wheel.
